# EUROPEAN PATENT APPLICATION

(11) **EP 4 184 822 A1**
(43) Date of publication of application: **24.05.2023**
(21) Application number: 21857153.7
(22) Date of filing: 15.03.2021

(54) **METHOD AND APPARATUS FOR KEEPING USER TERMINAL ALIVE**

(30) Priority: 18.08.2020 CN 202010833303
(71) Applicant: Huawei Technologies Co., Ltd., Shenzhen, Guangdong 518129 (CN)
(72) Inventor: LI, Juan, Shenzhen, Guangdong 518129 (CN); PENG, Tao, Shenzhen, Guangdong 518129 (CN)
(74) Representative: MERH-IP Matias Erny Reichl Hoffmann Patentanwälte PartG mbB
(86) International application number: PCT/CN2021/080855
(87) International publication number: WO 2022/037049

(57) **Abstract**

This application discloses a user keepalive method and apparatus, and relates to the communications field. The method provides a solution to keep a user alive in a CU-separated broadband access gateway. The method is used in a broadband access gateway including a control plane entity and a user plane entity. The broadband access gateway is configured to enable a user to access a network. The method is performed by the user plane entity. The method includes: sending probe packets to the user based on a preset parameter obtained by the user plane entity in advance; and if a probe response packet sent by the user is not received in preset duration, sending a probe failure message to the control plane entity, where the probe packets are used to check whether a communication link between the user and the user plane entity is faulty, and the probe failure message indicates the control plane entity to perform offline processing on the user.

## Description

This application claims priority to Chinese Patent Application No. 202010833303.7, filed with the China National Intellectual Property Administration on August 18, 2020 and entitled "USER KEEPALIVE METHOD AND APPARATUS", which is incorporated herein by reference in its entirety.

### TECHNICAL FIELD

This application relates to the communications field, and in particular, to a user keepalive method and apparatus.

### BACKGROUND

With development of a software-defined network (software defined network, SDN) technology and a network functions virtualization (network functions virtualization, NFV) technology, a metropolitan area network evolves from a conventional network-centric architecture to a data center-centric network architecture. A conventional network element device accordingly evolves from professional to universal. In this way, software and hardware are decoupled, and a control plane and a forwarding plane are decoupled in a communications network.

Usually, a broadband network gateway (broadband network gateway, BNG) is configured to enable a user to access a network. Based on NFV, a conventional BNG evolves to a virtual broadband network gateway (virtual Broadband Network Gateway, vBNG). Based on SDN, the vBNG evolves to a virtual broadband network gateway control plane (virtual broadband network gateway control plane, vBNG-CP) and a virtual broadband network gateway user plane (virtual broadband network gateway user plane, vBNG-UP). That is, a control plane and a forwarding plane of the vBNG are decoupled (or referred to as control plane and user plane separation, namely, CU separation). The vBNG-CP and the vBNG-UP are used together to implement a function of the vBNG.

For the conventional BNG, a user may send a probe packet or a renew packet to the conventional BNG, to keep the user alive after the user accesses a network. However, for a CU-separated vBNG, there is no corresponding solution to implement user keepalive after the user accesses a network.

### SUMMARY

This application provides a user keepalive method and apparatus, and provides a solution to keep a user alive in a CU-separated broadband access gateway.

To achieve the objective, this application provides the following technical solutions.

According to a first aspect, this application provides a user keepalive method. The method is used in a broadband access gateway including a control plane entity and a user plane entity. The broadband access gateway is configured to enable a user to access a network, and the method is performed by the user plane entity. The method includes: sending probe packets to the user based on a preset parameter; and sending a probe failure message to the control plane entity if a probe response packet sent by the user is not received in preset duration. The preset parameter is obtained by the user plane entity in advance, the probe packets are used to check whether a communication link between the user and the user plane entity is faulty, and the probe failure message indicates the control plane entity to perform offline processing on the user.

According to the user keepalive method provided in this application, the user plane entity may send the probe packets to the user, to keep the user alive. In addition, an offline user can be found in time by using the probe packets, and the user plane entity and the control plane entity can delete user entries of the offline user in time, to avoid accumulation of a large quantity of user entries of the offline user in the user plane entity and the control plane entity, and avoid a waste of resources. Furthermore, because the user plane entity sends the probe packets, a CPU load on the control plane entity can be reduced. In addition, the probe packets do not occupy a bandwidth of a packet channel between the control plane entity and the user plane entity, to save resources.

In a possible design manner, the "sending a probe failure message to the control plane entity if a probe response packet sent by the user is not received in preset duration" specifically includes: if the probe response packet sent by the user is not received in the preset duration, and a communication link between the control plane entity and the user plane entity is faulty, sending the probe failure message to the control plane entity after the communication link between the control plane entity and the user plane entity is recovered from being faulty.

According to the possible design, the user plane entity can report the probe failure message to the control plane entity immediately after the communication link between the control plane entity and the user plane entity is recovered from being faulty. In this way, the control plane entity can delete user entries of an offline user in time, to avoid accumulation of a large quantity of user entries of the offline user in the control plane entity, and avoid a waste of resources.

In another possible design manner, if the user is a user using a Dynamic Host Configuration Protocol DHCP, the method further includes: receiving DHCP lease of the user sent by the control plane entity, where the DHCP lease indicates duration in which a DHCP server allows the user to access a network.

In another possible design manner, if the communication link between the control plane entity and the user plane entity is faulty, the method further includes: if a DHCP renew packet sent by the user is not received in the DHCP lease, determining that the user is offline; and if a DHCP renew packet sent by the user is received in the DHCP lease, sending a DHCP renew success packet to the user.

According to the two possible designs, when the communication link between the control plane entity and the user plane entity is faulty, the user plane entity can act as a proxy to process the DHCP renew packet sent by the user, to keep the user alive.

In another possible design manner, after the communication link between the control plane entity and the user plane entity is recovered from being faulty, the method further includes: if it is determined that the user is offline, sending an offline message to the control plane entity, where the offline message indicates that the user is offline.

According to this possible design, after the communication link between the control plane entity and the user plane entity is recovered from being faulty, the user plane entity may immediately indicate the control plane entity to perform offline processing on the offline user. In this way, the control plane entity can delete user entries of the offline user in time, to avoid accumulation of a large quantity of user entries of the offline user in the control plane entity, and avoid a waste of resources.

In another possible design manner, after the communication link between the control plane entity and the user plane entity is recovered from being faulty, the method further includes: synchronizing a user entry with the control plane entity.

When the communication link between the control plane entity and the user plane entity is faulty, after the control plane entity fails to actively request to renew DHCP lease for some users, the control plane entity may delete user entries of the users. In this way, according to the possible design, after the communication link between the control plane entity and the user plane entity is recovered from being faulty, the user plane entity can update a user entry of the user plane entity in time based on a latest user entry delivered by the control plane entity. In this way, the user plane entity can delete, in time, a user entry of a user whose DHCP lease fails to be renewed, to avoid accumulation of user entries of users whose DHCP lease fails to be renewed in the user plane entity, and avoid a waste of resources.

In another possible design manner, the preset parameter further includes at least one of a sending interval of the probe packets, a quantity of timeouts, single probe timeout duration, a quantity of probe times, probe start and end time points, or probe duration.

In another possible design manner, if the communication link between the control plane entity and the user plane entity is normal, and the user is a user using the Dynamic Host Configuration Protocol DHCP, the method further includes: receiving a DHCP renew packet sent by the user, where the DHCP renew packet is used by the control plane entity to request the DHCP server to renew the DHCP lease; next forwarding the DHCP renew packet to the control plane entity; then receiving a DHCP renew response packet sent by the control plane entity, where the DHCP renew response packet indicates whether the DHCP lease of the user is successfully renewed; and finally sending the DHCP renew response packet to the user.

According to a second aspect, this application provides a user keepalive method. The method is used in a broadband access gateway including a control plane entity and a user plane entity. The broadband access gateway is configured to enable a user to access a network, and the method is performed by the control plane entity. The method includes: receiving a probe failure message sent by the user plane entity; and performing offline processing on the user based on the probe failure message. The probe failure message indicates that the user plane entity does not receive a probe response packet of the user in preset duration, the probe response packet is a response packet of a probe packet sent by the user plane entity to the user based on a preset parameter, and the preset parameter is a parameter sent by the control plane entity to the user plane entity in advance.

In a possible design manner, if the user is a user using a Dynamic Host Configuration Protocol DHCP, the method further includes: sending DHCP lease of the user to the user plane entity, where the DHCP lease indicates duration in which a DHCP server allows the user to access a network.

In another possible design manner, if a communication link between the control plane entity and the user plane entity is faulty, the method further includes: sending a DHCP renew packet to the DHCP server based on the DHCP lease of the user, where the DHCP renew packet is used to request to renew the DHCP lease of the user; then receiving a DHCP renew response packet sent by the DHCP server, where the DHCP renew response packet indicates whether the DHCP lease of the user is successfully renewed; and processing, based on the DHCP renew response packet, a user entry corresponding to the user.

According to the possible design, in the method provided in this application, when the communication link between the control plane entity and the user plane entity is faulty, the control plane entity may automatically request the server to renew the DHCP lease of the user. In this way, a problem that the user is offline due to the fault of the communication link between the control plane entity and the user plane entity is avoided. That is, the user is kept alive.

In another possible design manner, after the communication link between the control plane entity and the user plane entity is recovered from being faulty, the method further includes: receiving an offline message sent by the user plane entity, where the offline message indicates that the user is offline. Herein, that the user is offline is determined by the user plane entity based on a fact that the user plane entity does not receive, in the DHCP lease and when the communication link between the control plane entity and the user plane entity is faulty, the DHCP renew packet sent by the user.

In another possible design manner, after the communication link between the control plane entity and the user plane entity is recovered from being faulty, the method further includes: sending a user entry to the user plane entity, where the user entry is used by the user plane entity to synchronize a user entry in the user plane entity.

In another possible design manner, the preset parameter includes at least one of a sending interval of probe packets, a quantity of timeouts, single probe timeout duration, a quantity of probe times, probe start and end time points, or probe duration.

In another possible design manner, if a communication link between the control plane entity and the user plane entity is normal, and the control plane entity does not receive, in the DHCP lease of the user, a DHCP renew packet sent by the user through the user plane entity, the method further includes: performing offline processing on the user, where the DHCP renew packet is used to request to renew the DHCP lease of the user.

In another possible design manner, if a communication link between the control plane entity and the user plane entity is normal, and the control plane entity receives, in the DHCP lease of the user, a DHCP renew packet sent by the user through the user plane entity, the method further includes: sending the DHCP renew packet to the DHCP server; then receiving a DHCP renew response packet sent by the DHCP server, where the DHCP renew response packet indicates whether the DHCP lease of the user is successfully renewed; processing, based on the DHCP renew response packet, a user entry corresponding to the user; and sending the DHCP renew response packet to the user through the user plane entity.

For descriptions of beneficial effects of the second aspect and the possible technical solution of the second aspect, refer to descriptions of beneficial effects of the first aspect or the corresponding technical solution of the first aspect. Details are not described herein again.

According to a third aspect, this application provides a user keepalive apparatus.

In a possible design manner, the user keepalive apparatus is configured to perform any method provided in the first aspect or the second aspect. In this application, the user keepalive apparatus may be divided into function modules according to any method provided in the first aspect or the second aspect. For example, each function module may be obtained through division based on each corresponding function, or two or more functions may be integrated into one processing module. For example, in this application, the user keepalive apparatus may be divided into a sending unit and the like based on functions, or in this application, the user keepalive apparatus may be divided into a receiving unit, a processing unit, and the like based on functions. For descriptions of possible technical solutions performed by the function modules obtained through division and beneficial effects, refer to the technical solutions provided in the first aspect or the corresponding possible designs of the first aspect, or refer to the technical solutions provided in the second aspect or the corresponding possible designs of the second aspect. Details are not described herein again.

In another possible design, the user keepalive apparatus includes a memory and one or more processors, and the memory is coupled to the processor. The memory is configured to store computer instructions, and the processor is configured to invoke the computer instructions, so that the user keepalive apparatus performs any method provided in the first aspect and any possible design manner of the first aspect, or performs any method provided in the second aspect and any possible design manner of the second aspect.

According to a fourth aspect, this application provides a computer-readable storage medium, for example, a non-transient computer-readable storage medium. The computer-readable storage medium stores a computer program (or instructions). When the computer program (or instructions) is run on the user keepalive apparatus, the user keepalive apparatus is enabled to perform the method provided in any possible implementation of the first aspect or the second aspect.

According to a fifth aspect, this application provides a computer program product. When the computer program product runs on a user keepalive apparatus, the method provided in any possible implementation of the first aspect or the second aspect is performed.

According to a sixth aspect, this application provides a chip system, including a processor. The processor is configured to invoke and run, from a memory, a computer program stored in the memory, to perform the method provided in any implementation of the first aspect or the second aspect.

It may be understood that any one of the apparatus, the computer storage medium, the computer program product, the chip system, or the like provided above may be applied to a corresponding method provided above. Therefore, for beneficial effects that can be achieved by the apparatus, the computer storage medium, the computer program product, the chip system, or the like, refer to the beneficial effects of the corresponding method. Details are not described herein again.

In this application, names of the foregoing user keepalive apparatuses do not constitute any limitation to devices or function modules. During actual implementation, these devices or function modules may have other names. All devices or functional modules with functions similar to those in this application fall within the scope defined by the claims of this application and equivalent technologies of this application.

These aspects or other aspects in this application are more concise and comprehensible in the following descriptions.

### BRIEF DESCRIPTION OF DRAWINGS

FIG. 1 is a schematic diagram of a structure of a broadband access gateway according to an embodiment of this application;
FIG. 2 is a schematic diagram in which one control plane entity corresponds to a plurality of user plane entities according to an embodiment of this application;
FIG. 3 is a schematic architectural diagram of a network architecture according to an embodiment of this application;
FIG. 4 is a schematic diagram of a hardware structure of a computer device according to an embodiment of this application;
FIG. 5 is a schematic flowchart 1 of a user keepalive method according to an embodiment of this application;
FIG. 6 is a schematic diagram of flow directions of probe packets according to an embodiment of this application;
FIG. 7 is a schematic flowchart 2 of a user keepalive method according to an embodiment of this application;
FIG. 8 is a schematic diagram 1 of flow directions of a DHCP renew packet and a DHCP renew response packet according to an embodiment of this application;
FIG. 9 is a schematic flowchart 3 of a user keepalive method according to an embodiment of this application;
FIG. 10 is a schematic flowchart 4 of a user keepalive method according to an embodiment of this application;
FIG. 11 is a schematic diagram 2 of flow directions of a DHCP renew packet and a DHCP renew response packet according to an embodiment of this application;
FIG. 12 is a schematic diagram 1 of a structure of a user keepalive apparatus according to an embodiment of this application;
FIG. 13 is a schematic diagram 2 of a structure of a user keepalive apparatus according to an embodiment of this application;
FIG. 14 is a schematic diagram of a structure of a chip system according to an embodiment of this application; and
FIG. 15 is a schematic diagram of a structure of a computer program product according to an embodiment of this application.

### DESCRIPTION OF EMBODIMENTS

In addition, in embodiments of this application, the word "example" or "for example" is used to represent giving an example, an illustration, or a description. Any embodiment or design scheme described as the word "example" or "for example" in embodiments of this application should not be explained as being more preferred or having more advantages than another embodiment or design scheme. Exactly, use of the word such as "example" or "for example" is intended to present a related concept in a specific manner.

The term "at least one" in this application means one or more, and the term "a plurality of in this application means two or more. For example, "a plurality of second packets" means two or more second packets. The terms "system" and "network" may be used interchangeably in this specification.

It should be understood that the terms used in the descriptions of the various examples in the specification are merely intended to describe specific examples but are not intended to constitute a limitation. The terms "one" ("a" and "an") and "the" of singular forms used in the descriptions of various examples and the appended claims are also intended to include plural forms, unless otherwise specified in the context clearly.

It should be understood that, the term "and/or" used in this specification indicates and includes any or all possible combinations of one or more items in associated listed items. The term "and/or" describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should further be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It should be understood that determining B based on A does not mean that B is determined based on only A. B may alternatively be determined based on A and/or other information.

It should be further understood that the term "include" (or referred to as "includes", "including", "comprises", and/or "comprising"), when being used in this specification, specifies the presence of stated features, integers, steps, operations, elements, and/or components, but do not preclude the presence or addition of one or more other features, integers, steps, operations, elements, components, and/or groups thereof.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that "one embodiment", "an embodiment", or "a possible implementation" mentioned throughout specification means that particular features, structures, or characteristics related to the embodiments or implementations are included in at least one embodiment of this application. Therefore, "in one embodiment", "in an embodiment", or "in a possible implementation" appearing throughout this specification does not necessarily refer to a same embodiment. In addition, these particular features, structures, or characteristics may be combined in one or more embodiments in any proper manner.

Embodiments of this application provide a user keepalive method. The method is used in a broadband access gateway (namely, a CU-separated broadband access gateway) including a control plane entity and a user plane entity. The broadband access gateway is configured to enable a user to access a network. According to the method, the user plane entity sends probe packets to the user, and the user plane entity and the control plane entity process a Dynamic Host Configuration Protocol (dynamic host configuration protocol, DHCP) renew packet, to keep the user alive in the CU-separated broadband access gateway.

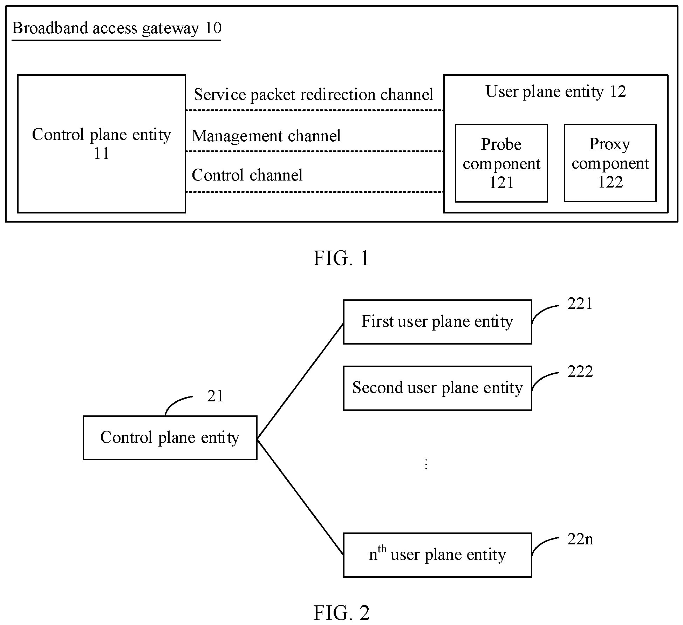

FIG. 1 is a schematic diagram of a structure of a broadband access gateway 10 according to an embodiment of this application. As shown in FIG. 1, the broadband access gateway 10 includes a control plane entity 11 and a user plane entity 12.

The control plane entity 11 is configured to implement a control function of the broadband access gateway 10. The control plane entity 11 is specifically configured to connect to and communicate with servers that have different purposes/functions, to control and manage network access of a user connected to the user plane entity 12.

For example, the control plane entity may be configured to: process an access protocol packet used when the user connected to the user plane entity 12 accesses a network, authenticate an identity of the user, generate a forwarding entry and a user entry of the user, deliver the forwarding entry and the user entry to the user plane entity 12, and the like.

The user entry may include identification information of the user. The identification information of the user may include at least one of an Internet Protocol (internet protocol, IP) address, a media access control (media access control, MAC) address, a virtual local area network (virtual local area network, VLAN) address, a session identifier (session ID), DHCP lease, or the like of the user. It may be understood that the user entry may be generally obtained and generated when the control plane entity processes the access protocol packet of the user, and then delivered to the user plane entity connected to the user.

The forwarding entry may be a forwarding path entry used by the user plane entity in the broadband access gateway to forward a data flow of the user after the user accesses a network through the broadband access gateway.

The user plane entity 12 is connected to the control plane entity 11, and is configured to implement a forwarding function of the broadband access gateway 10. For example, the user plane entity 12 may be configured to forward, to the control plane entity 11, an access protocol packet sent by the user connected to the user plane entity 12, or the user plane entity 12 may be configured to forward an IP data flow for the user connected to the user plane entity 12 after the user accesses a network.

Optionally, the user plane entity 12 may include a probe component 121 and a proxy component 122.

The probe component 121 may be configured to obtain a preset parameter, send probe packets to the user based on the preset parameter, receive a probe response packet of the user, and the like. For example, the probe component 121 may be configured to perform S101 to S104 in the following, and details are not described herein.

The proxy component 122 may be configured to: when a communication link between the control plane entity 11 and the user plane entity 12 is faulty, act as a proxy to process a DHCP renew packet sent by the user. For example, the proxy component 122 may be configured to perform S301 to S304 in the following, and details are not described herein. For a description of the DHCP renew packet, refer to the following description of the DHCP renew packet. Details are not described herein.

Optionally, the control plane entity 11 and the user plane entity 12 may be connected and communicate with each other through three communications channels.

As shown in FIG. 1, the three communications channels include a service packet redirection channel, a management channel, and a control channel.

The packet redirection channel may be implemented by using a packet redirection interface between the control plane entity 11 and the user plane entity 12. For example, when receiving a user access protocol packet, the user plane entity 12 may encapsulate the packet and send the packet to the control plane entity 11 through the packet redirection interface for processing.

The management channel may be implemented by using a management interface (Mi) between the control plane entity 11 and the user plane entity 12. For example, the control plane entity 11 may deliver a configuration parameter to the user plane entity 12 through the management interface, and the user plane entity 12 may report some running statuses and the like to the control plane entity 11 through the management interface.

The control channel may be implemented by using a control interface between the control plane entity 11 and the user plane entity 12. For example, after the user goes online, the control plane entity 11 may deliver, through the control interface, a user entry, a forwarding entry, and the like to the user plane entity connected to the user.

It should be understood that one control plane entity and one user plane entity may serve as one broadband access gateway, to provide a network access service for a user. However, one control plane entity may correspond to a plurality of user plane entities. In this way, the control plane entity and the plurality of user plane entities may serve as a plurality of broadband access gateways, to provide network access services for a plurality of users.

FIG. 2 is a schematic diagram of an example in which one control plane entity corresponds to a plurality of user plane entities. As shown in FIG. 2, a control plane entity 21 corresponds to n user plane entities, including a first user plane entity 221, a second user plane entity 222, ..., and an n^{th} user plane entity 22n, where n is a positive integer.

In this way, the control plane entity 21 and the first user plane entity 221 may serve as a first broadband access gateway to provide a network access service for a first user. Similarly, the control plane entity 21 and the second user plane entity 222 may serve as a second broadband access gateway to provide a network access service for a second user. The control plane entity 21 and the n^{th} user plane entity 22n may serve as an n^{th} broadband access gateway to provide a network access service for an n^{th} user.

For example, the control plane entity may be a vBNG-CP, and the user plane entity may be a vBNG-UP. In this way, a CU-separated vBNG system including the vBNG-CP and the vBNG-UP may serve as the broadband access gateway provided in embodiments of this application, to provide a network access service for a user.

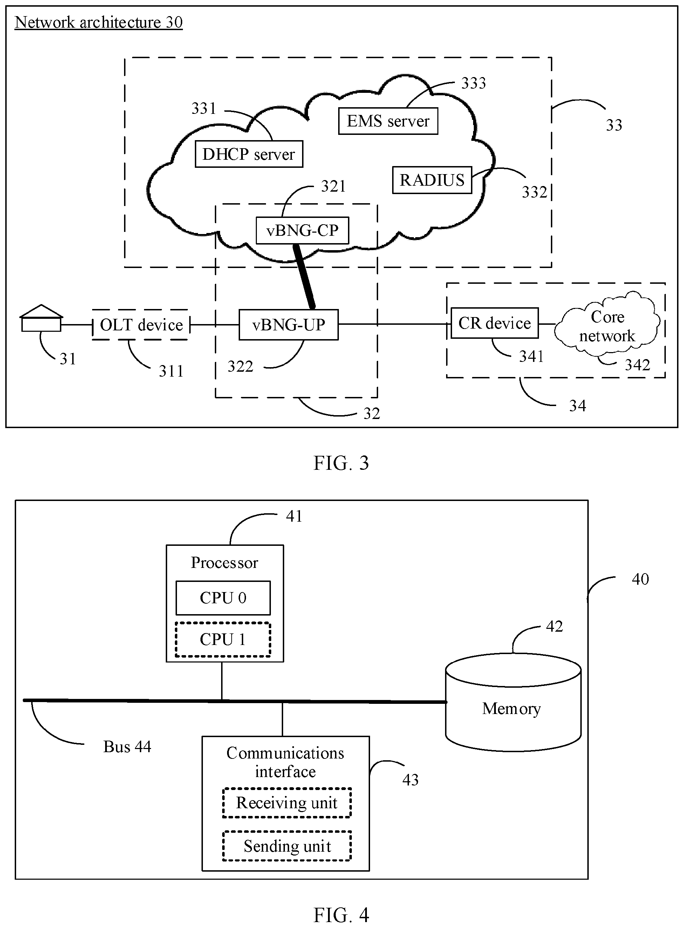

FIG. 3 is a schematic architectural diagram of a network architecture 30 according to an embodiment of this application. The foregoing broadband access gateway may be used in the network architecture 30. As shown in FIG. 3, the network architecture 30 includes a user 31, a vBNG system 32, a server end 33, and a network end 34. The vBNG system 32 is a CU-separated vBNG system. Therefore, the vBNG system 32 is the broadband access gateway provided in embodiments of this application.

The user 31 is connected to a vBNG-UP 322 in the vBNG system 32, and may access a network of the network end 34 through the vBNG system 32.

Optionally, the user 31 may be connected to the vBNG-UP 322 in the vBNG system 32 through an optical line terminal (Optical Line Terminal, OLT) device 311. Herein, the OLT device 311 serves as a switching device, and may connect a plurality of users including the user 31 to the vBNG-UP 322.

It should be understood that the user 31 may be a user that supports an Address Resolution Protocol (Address Resolution Protocol, ARP), or may be a user that supports a Neighbor Discovery Protocol (Neighbor Discovery Protocol, NDP), or may be a user that supports a Point-to-Point Protocol (Point to Point Protocol, PPP), or may be a user that supports a DHCP. This is not limited in this application.

The vBNG system 32 includes a vBNG-CP 321 and the vBNG-UP 322.

The vBNG-CP 321 may be configured to control and manage network access of the user 31 connected to the vBNG-UP 322.

Generally, the vBNG-CP 321 is disposed on the server end 33, and may be connected to and communicate with servers having different functions/purposes in the server end 33.

For example, the vBNG-CP 321 may be connected to the DHCP server 331 of the server end 33, to implement network access of a user using the DHCP.

For another example, the vBNG-CP 321 may be connected to and communicate with a remote authentication dial-in user service (remote authentication dial-in user service, RADIUS) server 332 of the server end 33, to implement network access of a user that needs to access a network through an Internet Protocol over Ethernet (Internet Protocol Over Ethernet, IPOE) or a user that needs to access a network through a Point-to-Point Protocol over Ethernet (Point-to-Point Protocol Over Ethernet, PPPOE).

For another example, the vBNG-CP 321 may be further connected to and communicate with an element management system (Element Management System, EMS) server 333 of the server end 33, so that the EMS server 333 manages a plurality of network elements including the vBNG-CP.

The vBNG-UP 322 is separately connected to and communicates with the user 31, the vBNG-CP 321, and the network end 34, to provide a packet and/or IP data flow forwarding service for the user 31.

For example, when the user 31 requests to access the network of the network end 34, the vBNG-UP 322 may receive an access protocol packet of the user 31 and forward the access protocol packet to the vBNG-CP 321. Alternatively, after the user 31 accesses the network of the network end 34, the vBNG-UP 322 may forward an IP data flow from the user 31 to the network end 34, or forward an IP data flow from the network end 34 to the user 31, or the like.

It should be understood that, in the network architecture 30, the vBNG-CP 321 may be further connected to a plurality of vBNG-UPs (not shown in FIG. 3) other than the vBNG-UP 322, so that the vBNG-CP 321 and the plurality of vBNG-UPs can serve as a plurality of broadband access gateways to provide network access services for a plurality of users.

It should be understood that when a network user lays out the network architecture 30, after a connection is established between the vBNG-CP 321 and the vBNG-UP 322 based on layout planning of the network architecture, the vBNG-CP 321 may determine a protocol type supported by the user 31 connected to the vBNG-UP 322. Details are not described in embodiments of this application.

Servers with different functions and purposes, for example, including the vBNG-CP 321, the DHCP server 331, the RADIUS 332, and the EMS server 333 are disposed on the server end 33.

It should be understood that the servers may be connected and communicate with each other through a dedicated network connection. Certainly, the servers may alternatively be connected and communicate with each other through a public network connection. This is not limited in embodiments of this application.

The network end 34 is configured to provide a network service for the user 31. The network end 34 may include a core network (core network) 342. It should be understood that a network type of the network end 34 is not specifically limited in embodiments of this application.

The network end 34 may further include a core router (core router, CR) device 341. In this way, the vBNG-UP 322 in the vBNG system 32 may be connected to and communicate with the core network 342 of the network end 34 through the CR device 341.

Embodiments of this application further provide a user keepalive apparatus. The apparatus is configured to implement the foregoing function of the control plane entity. The apparatus may be a server, or may be used in a server. It should be understood that the server may be a physical server, for example, a computer device that implements a server function, or the server may be a cloud server or the like. This is not limited in embodiments of this application.

Embodiments of this application further provide another user keepalive apparatus, configured to implement the foregoing function of the user plane entity. The apparatus may be used in any computing device having a forwarding function, for example, a computer device. The apparatus may be further used in a routing device or the like. This is not limited in embodiments of this application.

FIG. 4 is a schematic diagram of a hardware structure of a computer device. As shown in FIG. 4, the computer device 40 includes a processor 41, a memory 42, a communications interface 43, and a bus 44. The processor 41, the memory 42, and the communications interface 43 may be connected through the bus 44.

The processor 41 is a control center of the computer device 40, and may be a general-purpose central processing unit (central processing unit, CPU), another general-purpose processor, or the like. The general-purpose processor may be a microprocessor, any conventional processor, or the like.

For example, the processor 41 may include one or more CPUs, for example, a CPU 0 and a CPU 1 shown in FIG. 4.

The memory 42 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a magnetic disk storage medium or another magnetic storage device, or any other medium capable of carrying or storing expected program code in a form of an instruction or a data structure and capable of being accessed by a computer, but is not limited thereto.

In a possible implementation, the memory 42 may be independent of the processor 41. The memory 42 may be connected to the processor 41 through the bus 44, and is configured to store data, instructions, or program code. When invoking and executing the instructions or the program code stored in the memory 42, the processor 41 can implement the user keepalive method provided in embodiments of this application.

In another possible implementation, the memory 42 may alternatively be integrated with the processor 41.

The communications interface 43 is configured to connect the computer device 40 to another device (such as a DHCP server, a RADIUS, an EMS server, or a user) through a communications network. The communications network may be Ethernet, a radio access network (radio access network, RAN), wireless local area networks (wireless local area networks, WLAN), or the like. The communications interface 43 may include a receiving unit configured to receive data and a sending unit configured to send data.

The bus 44 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, the bus is represented by using only one bold line in FIG. 4. However, this does not indicate that there is only one bus or only one type of bus.

It should be noted that a structure shown in FIG. 4 does not constitute a limitation on the computer device. In addition to the components shown in FIG. 4, the computer device 40 may include more or fewer components than those shown in the figure, or some components may be combined, or different component arrangements may be used.

The following describes the user keepalive method provided in embodiments of this application in detail with reference to the accompanying drawings.

### Embodiment 1

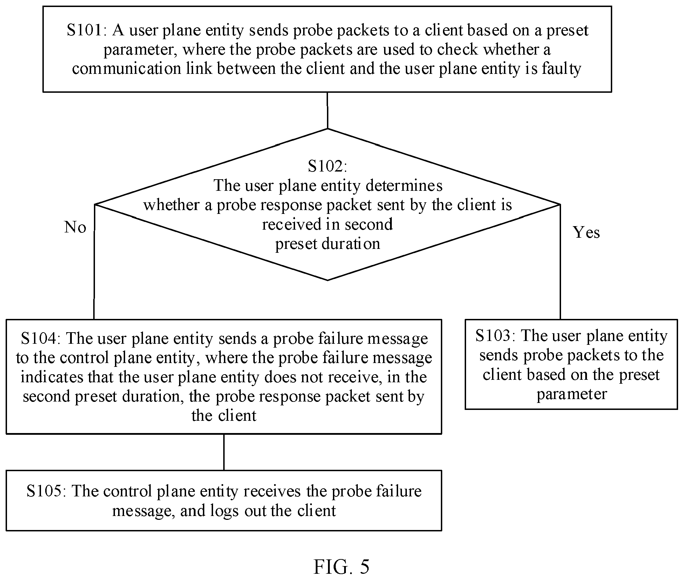

FIG. 5 is a schematic flowchart of a user keepalive method according to an embodiment of this application. The method may be used in a broadband access gateway (for example, the broadband access gateway 10 shown in FIG. 1, or the vBNG system 32 shown in FIG. 3). The broadband access gateway includes a control plane entity and a user plane entity, and the control plane entity and the user plane entity are connected and communicate with each other. The broadband access gateway is configured to enable a user to access a network. The method may include the following steps.

S101: The user plane entity sends probe packets to the user based on a preset parameter, where the probe packets are used to check whether a communication link between the user and the user plane entity is faulty.

The preset parameter is preset by the user plane entity, or may be obtained by the user plane entity in advance, for example, obtained from the control plane entity in advance. This is not specifically limited in this embodiment of this application.

Optionally, the preset parameter may include at least one of a sending interval of the probe packets, a quantity of timeouts, single probe timeout duration, a quantity of probe times, probe start and end time points, or probe duration.

The sending interval is a time interval at which the user plane entity continuously sends two probe packets. It should be understood that two time intervals at which the user plane entity continuously sends three probe packets may be the same or may be different. This is not limited in this embodiment of this application.

The quantity of timeouts means that when the user plane entity continuously sends m probe packets and does not receive response packets of the m probe packets, m is the quantity of timeouts of the probe packets, where m is a positive integer.

The single probe timeout duration means that after the user plane entity sends one probe packet, if the user plane entity does not receive a response packet of the probe packet in first preset duration, the first preset duration is referred to as single probe timeout duration in this embodiment of this application.

The quantity of probe times is a total quantity of times that the user plane entity sends the probe packets.

The probe start and end time points are a time point at which the user plane entity starts to send the probe packets and a time point at which the user plane entity stops sending the probe packets.

The probe duration is total duration in which the user plane entity sends the probe packets.

It should be understood that the control plane entity may pre-configure the preset parameter as an enabling command line, and send the enabling command line to the user plane entity through a control channel between the control plane entity and the user plane entity. In this way, the user plane entity obtains the preset parameter.

In this way, after the user accesses a network through the broadband access gateway including the control plane entity and the user plane entity, that is, after the user goes online, the user plane entity sends the probe packets to the user based on a user entry of the user and the obtained preset parameter.

The user entry may be a user entry that is sent by the control plane entity to the user plane entity in advance through the control channel.

It may be understood that, when the user may be a user that supports an ARP, the preset parameter configured by the control end is a preset parameter that supports the ARP, and the user entry may include at least one of an IP address, a MAC address, or a VLAN address of the user. When the user may be a user that supports an ND, the preset parameter configured by the control end is a preset parameter that supports the ND, and the user entry may include at least one of the IP address, the MAC address, or the VLAN address of the user. When the user may be a user that supports a PPP, the preset parameter configured by the control end is a preset parameter that supports the PPP, and the user entry may include at least one of the IP address, the MAC address, the VLAN address, or a session ID of the user.

S102: The user plane entity determines whether a probe response packet sent by the user is received in second preset duration (corresponding to preset duration in embodiments of this application).

The second preset duration may be the single probe timeout duration of the probe packet in the preset parameter, or may be a product of the quantity of timeouts and the single probe timeout duration of the probe packet in the preset parameter. This is not specifically limited in this embodiment of this application.

If the user plane entity receives, in the second preset duration, the probe response packet sent by the user, S103 is to be performed. If the user plane entity does not receive, in the second preset duration, the probe response packet sent by the user, S104 and S105 are to be performed.

S103: The user plane entity sends probe packets to the user based on the preset parameter.

It should be understood that, when the user plane entity receives the probe response packet in the second preset duration, it indicates that the communication link between the user and the user plane entity is not faulty, or in other words, the communication link is normal. In this case, the user plane entity may send the probe packet to the user based on a probe packet sending moment corresponding to the probe response packet and the sending interval of the probe packet in the preset parameter.

S104: The user plane entity sends a probe failure message to the control plane entity, where the probe failure message indicates that the user plane entity does not receive, in the second preset duration, the probe response packet sent by the user.

When the user plane entity does not receive, in the second preset duration, the probe response packet sent by the user, the user plane entity may determine that the communication link between the user and the user plane entity is faulty. For example, the user is faulty, or a link between the user and the user plane entity is faulty.

In this way, the user plane entity may determine that the user is offline. In this case, the user plane entity may generate the probe failure message. The probe failure message indicates the control plane entity to perform offline processing on the user. The probe failure message may include an identity of the user, for example, information such as an IP address of the user. This is not specifically limited in this embodiment of this application.

Herein, the offline processing on the user may include: stopping charging traffic of the user, deleting the user entry of the user, and the like.

In a possible case, a communication link between the control plane entity and the user plane entity is not faulty. In other words, the communication link is normal. In this case, the user plane entity may directly send the probe failure message to the control plane entity after generating the probe failure message.

In another possible case, the communication link between the control plane entity and the user plane entity is faulty. In this case, the user plane entity may buffer the generated probe failure message, and send the probe failure message to the control plane entity after the communication link between the control plane entity and the user plane entity is recovered from being faulty.

It should be understood herein that the user plane entity may sense in real time whether the communication link between the control plane entity and the user plane entity is faulty. In this way, the user plane entity may perform a corresponding operation based on a sensed status of the communication link between the control plane entity and the user plane entity. Details are not described.

It should be understood that, after determining that the user is offline and generating the probe failure message, the user plane entity may delete the user entry of the user to release resources, so as to improve resource utilization of the user plane entity.

S105: The control plane entity receives the probe failure message, and performs offline processing on the user.

Specifically, after receiving the probe failure message, the control plane entity performs, based on the identity of the user in the probe failure message, offline processing on the user corresponding to the identity, for example, stops charging traffic of the user, and deletes the user entry of the user. In this way, the control plane entity releases resources in time, to improve resource utilization of the control plane entity.

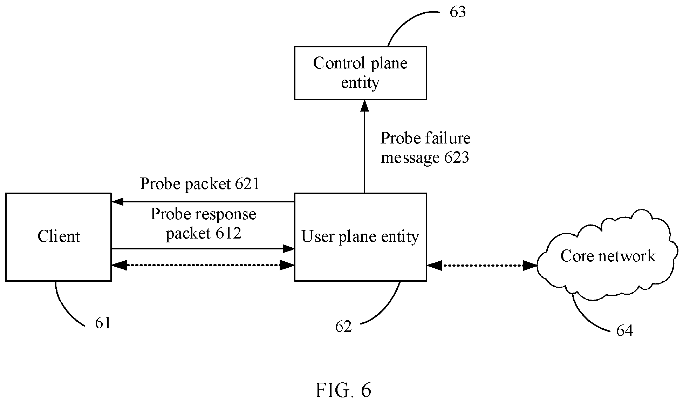

FIG. 6 shows an example of a schematic diagram of flow directions of probe packets. As shown in FIG. 6, a user plane entity 62 sends a probe packet 621 to a user 61. If the user plane entity 62 receives, in preset duration, a probe response packet 612 sent by the user 61, it indicates that a communication link between the user plane entity 62 and the user 61 is normal. In this case, the user plane entity may continue to send a probe packet to the user 61 based on a preset parameter.

If the user plane entity 62 does not receive, in the preset duration, the probe response packet 612 sent by the user 61, it indicates that the communication link between the user plane entity 62 and the user 61 is faulty. In this case, the user plane entity may determine that the user 61 is offline, and send a probe failure message 623 to the control plane entity 63, so that the control plane 63 performs offline processing on the user 61.

It should be understood that double-headed dashed lines in FIG. 6 are used to represent IP data flows exchanged between the user 61 and a core network 64 after the user 61 accesses the core network 64 through a broadband access gateway including the user plane entity 62 and the control plane entity 63.

In this way, according to the method, the user plane entity actively sends probe packets to the user, to determine a current status of the link between the user plane entity and the user, so as to keep the user alive. When the user plane entity does not receive the probe response packet in the preset duration, the user plane entity reports the probe failure message to the control plane entity, to indicate the control plane entity to perform offline processing on the user. In this way, an offline user can be found in time by using the probe packets, and the user plane entity and the control plane entity can delete user entries of the offline user in time, to avoid accumulation of a large quantity of user entries of the offline user in the user plane entity and the control plane entity, and avoid a waste of resources.

Furthermore, because the user plane entity sends the probe packets, a CPU load on the control plane entity can be reduced. In addition, the probe packets do not occupy a bandwidth of a packet channel between the control plane entity and the user plane entity, to save resources.

### Embodiment 2

A user keepalive method provided in this embodiment of this application is used in a broadband access gateway (for example, the broadband access gateway 10 shown in FIG. 1 or the vBNG system 32 shown in FIG. 3). The broadband access gateway includes a control plane entity and a user plane entity, and the control plane entity and the user plane entity are connected and communicate with each other. The broadband access gateway is configured to enable a user to access a network.

In this embodiment, the user may be a DHCP user. In this way, the broadband access gateway keeps the user alive by processing a DHCP renew packet of the DHCP user.

The following describes Embodiment 2 of this application based on specific scenarios.

### Scenario 1:

This scenario is a scenario in which a communication link between the control plane entity and the user plane entity is normal in the broadband access gateway.

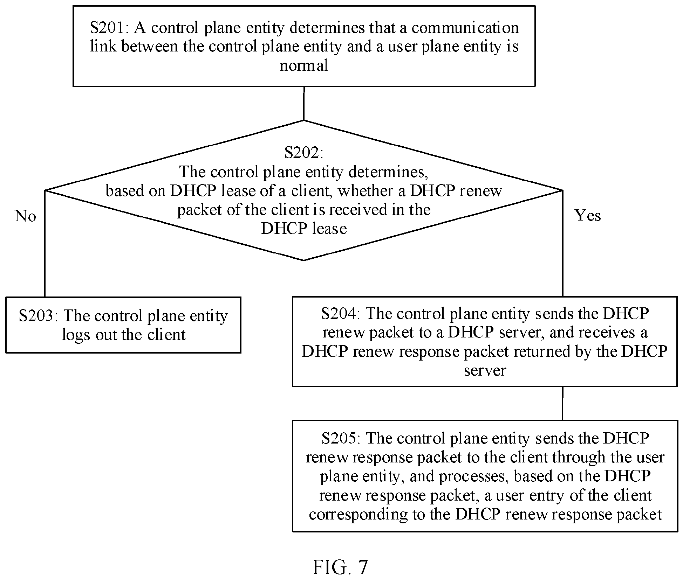

FIG. 7 is a schematic flowchart of another user keepalive method according to an embodiment of this application. The method may include the following steps.

S201: The control plane entity determines that the communication link between the control plane entity and the user plane entity is normal.

Usually, the control plane entity may sense in real time whether the communication link between the control plane entity and the user plane entity is faulty. When sensing that the communication link between the control plane entity and the user plane entity is not faulty, or in other words, the communication link is normal, the control plane entity may perform steps S202 to S205.

S202: The control plane entity determines, based on DHCP lease of the user, whether a DHCP renew packet of the user is received in the DHCP lease. The DHCP renew packet is used to request a DHCP server to renew the DHCP lease.

Herein, the DHCP lease indicates duration in which the DHCP server allows the user to access a network. The DHCP lease may be obtained by the control plane entity when the control plane entity processes an access protocol packet used when the user accesses a network.

The DHCP lease may include a start time point and an end time point of the DHCP lease. Alternatively, the DHCP lease may include a start time point of the DHCP lease and duration of the DHCP lease. In this way, the user plane entity may determine the start time point and the end time point of the DHCP lease based on the start time point of the DHCP lease and the duration of the DHCP lease.

In this way, based on the DHCP lease of the user, the control plane entity may determine whether the DHCP renew packet sent by the user through the user plane entity is received in the DHCP lease.

If the control plane entity does not receive, in the DHCP lease, the DHCP renew packet sent by the user through the user plane entity, the control plane entity performs S203. If the control plane entity receives, in the DHCP lease, the DHCP renew packet sent by the user through the user plane entity, the control plane entity performs S204.

S203: The control plane entity performs offline processing on the user.

If the control plane entity does not receive, in the DHCP lease, the DHCP renew packet sent by the user through the user plane entity, it indicates that the user gives up renewing the DHCP lease. In this case, the control plane entity may determine that the user is offline, and perform offline processing on the user.

For a related description of the offline processing, refer to the foregoing description. Details are not described herein again.

S204: The control plane entity sends the DHCP renew packet to the DHCP server, and receives a DHCP renew response packet returned by the DHCP server. The DHCP renew response packet indicates whether the DHCP lease of the user is successfully renewed.

The DHCP renew packet is a packet sent by the user to the control plane entity through the user plane entity.

Specifically, the user may send the DHCP renew packet to the control plane entity through the user plane entity at a preset moment.

Optionally, the user may send the DHCP renew packet to the control plane entity through the user plane entity at 1/2 or 7/8 of the current DHCP lease.

In this way, the control plane entity receives the DHCP renew packet.

Then, after the control plane entity sends the DHCP renew packet to the DHCP server, correspondingly, the DHCP server receives the DHCP renew packet of the user.

Optionally, after receiving the DHCP renew packet of the user through the broadband access gateway, the DHCP server determines, based on address allocation on the DHCP server at a current moment, whether to allow to successfully renew the DHCP lease of the user.

Usually, if the DHCP server allows renewing the DHCP lease of the user, after the current DHCP lease of the user expires, the user may further access a network for another DHCP lease.

Then, the DHCP server generates the DHCP renew response packet based on a determining result, and returns the DHCP renew response packet to the control plane entity.

In this way, the control plane entity in the broadband access gateway can receive the DHCP renew response packet.

S205: The control plane entity sends the DHCP renew response packet to the user through the user plane entity, and processes, based on the DHCP renew response packet, a user entry of the user corresponding to the DHCP renew response packet.

When receiving the DHCP renew response packet, the control plane entity sends the DHCP renew response packet to the user through the user plane entity, to notify the user of whether the DHCP server allows to renew the DHCP lease of the user (that is, notify the user of whether the DHCP lease of the user is successfully renewed).

It should be understood that if the DHCP renew response packet indicates that the DHCP lease of the user is not renewed, the control plane entity further performs offline processing on the user based on the DHCP lease of the user after the DHCP lease expires.

For a related description of the offline processing, refer to the foregoing description. Details are not described herein again.

Correspondingly, after receiving the DHCP renew response packet, the user may determine whether the DHCP lease is successfully renewed.

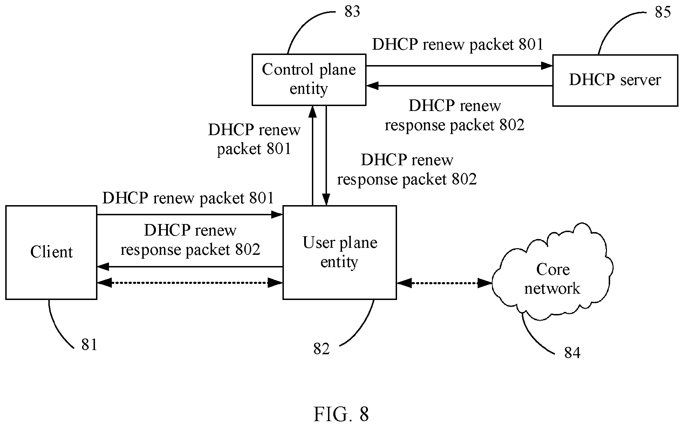

FIG. 8 shows an example of a schematic diagram of flow directions of a DHCP renew packet and a DHCP renew response packet in Scenario 1. As shown in FIG. 8, when a communication link between a control plane entity 83 and a user plane entity 82 is not faulty, in other words, when the communication link between the control plane entity 83 and the user plane entity 82 is normal, a user 81 sends a DHCP renew packet 801 to the user plane entity 82, and the user plane entity 82 forwards the DHCP renew packet 801 to the control plane entity 83. Next, the control plane entity 83 sends the DHCP renew packet 801 to a DHCP server 85.

Then, the DHCP server 85 determines a DHCP renew response packet 802 based on the DHCP renew packet 801, and sends the DHCP renew response packet 802 to the control plane entity 83. After performing corresponding processing based on the DHCP renew response packet 802, the control plane entity 83 sends the DHCP renew response packet 802 to the user 81 through the user plane entity 82.

It should be understood that double-headed dashed lines in FIG. 8 are used to represent IP data flows exchanged between the user 81 and a core network 84 after the user 81 accesses the core network 84 through a broadband access gateway including the user plane entity 82 and the control plane entity 83.

### Scenario 2:

This scenario is a scenario in which a communication link between the control plane entity and the user plane entity is faulty in the broadband access gateway.

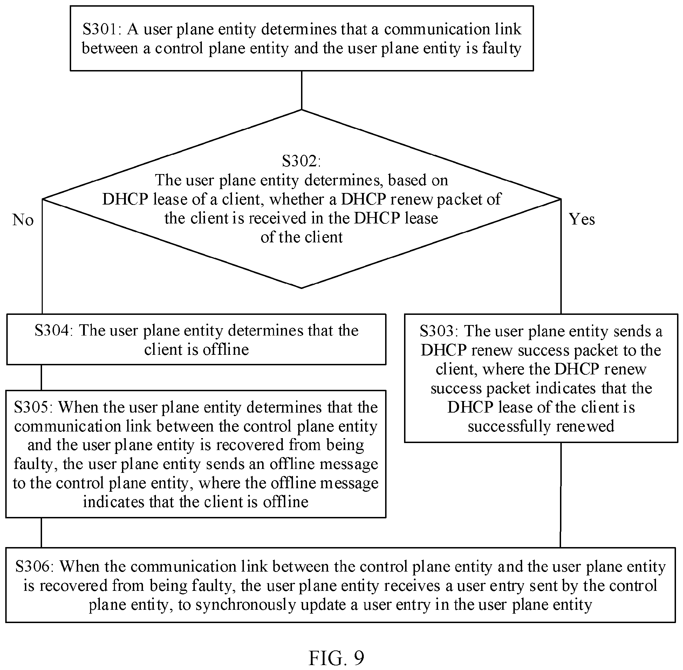

FIG. 9 is a schematic flowchart of still another user keepalive method according to an embodiment of this application. The method is performed by the user plane entity. The method may include the following steps.

S301: The user plane entity determines that the communication link between the control plane entity and the user plane entity is faulty.

Usually, the user plane entity may sense in real time whether the communication link between the control plane entity and the user plane entity is faulty. When sensing that the communication link between the control plane entity and the user plane entity is faulty, the user plane entity starts a proxy component of the user plane entity, and performs S302 to S306 by using the proxy component.

S302: The user plane entity determines, based on DHCP lease of the user, whether a DHCP renew packet of the user is received in the DHCP lease of the user.

The DHCP lease may be preset by the user plane entity, or may be obtained by the user plane entity in advance.

Optionally, the DHCP lease may be obtained by the user plane entity from the control plane entity in advance. It should be understood that the control plane entity may obtain the DHCP lease of the user when the control plane entity processes an access protocol packet used when the user accesses a network. Then, the control plane entity may configure the DHCP lease as an enabling command line, and send the enabling command line to the user plane entity through a control channel between the control plane entity and the user plane entity. In this way, the user plane entity obtains the DHCP lease.

The DHCP lease may include a start time point and an end time point of the DHCP lease. Alternatively, the DHCP lease may include a start time point of the DHCP lease and duration of the DHCP lease. In this way, the user plane entity may determine the start time point and the end time point of the DHCP lease based on the start time point of the DHCP lease and the duration of the DHCP lease.

In this way, based on the DHCP lease of the user, the user plane entity may determine whether the DHCP renew packet sent by the user is received in the DHCP lease.

If the user plane entity receives the DHCP renew packet in the DHCP lease, the user plane entity performs S303. If the user plane entity does not receive the DHCP renew packet in the DHCP lease, the user plane entity performs S304 and S305.

S303: The user plane entity sends a DHCP renew success packet to the user, where the DHCP renew success packet indicates that the DHCP lease of the user is successfully renewed.

Herein, because the communication link between the control plane entity and the user plane entity is faulty, when the user plane entity receives the DHCP renew packet of the user in the DHCP lease, the user plane entity sends the DHCP renew success packet to the user, to notify the user that the DHCP lease is successfully renewed, to keep the user alive.

S304: The user plane entity determines that the user is offline.

If the user plane entity does not receive the DHCP renew packet of the user in the DHCP lease, it indicates that the user gives up renewing the DHCP lease. In this way, the user plane entity may determine that the user is offline.

In this case, the user plane entity may store/buffer an offline message of the user, and the offline message indicates that the user is offline. It should be understood that the offline message includes an identity of the user.

It can be learned that when the communication link between the control plane entity and the user plane entity is faulty, the user plane entity may act as a proxy to process the DHCP renew packet, so as to keep the user alive.

S305: When the user plane entity determines that the communication link between the control plane entity and the user plane entity is recovered from being faulty, the user plane entity sends the offline message to the control plane entity. The offline message indicates that the user is offline.

After the communication link between the control plane entity and the user plane entity is recovered from being faulty, the user plane entity sends the stored/buffered offline message to the control plane entity, to notify the control plane entity that the user is offline, so that the control plane entity can perform offline processing on the user.

For a related description of the offline processing, refer to the foregoing description. Details are not described herein again.

It should be understood that, after determining that the user is offline and storing/buffering the offline message, the user plane entity may delete a user entry of the user to release resources, so as to improve resource utilization of the user plane entity.

S306: When the communication link between the control plane entity and the user plane entity is recovered from being faulty, the user plane entity receives a user entry sent by the control plane entity, to synchronously update a user entry in the user plane entity.

Herein, the user entry is a latest user entry in the control plane entity. For a description of delivering, by the control plane entity, the user entry to the user plane entity after the control plane entity determines that the communication link between the control plane entity and the user plane entity is recovered from being faulty, refer to S404 below. Details are not described herein.

After receiving the user entry delivered by the control plane entity, the user plane entity synchronously updates the user entry in the user plane entity based on the user entry.

In this way, by performing S301 to S306, when the control plane entity determines that the communication link between the control plane entity and the user plane entity is faulty, the user plane entity can act as a proxy to process the DHCP renew packet of the user, so as to avoid a problem that the user is offline because the communication link between the control plane entity and the user plane entity is faulty. This keeps the user alive.

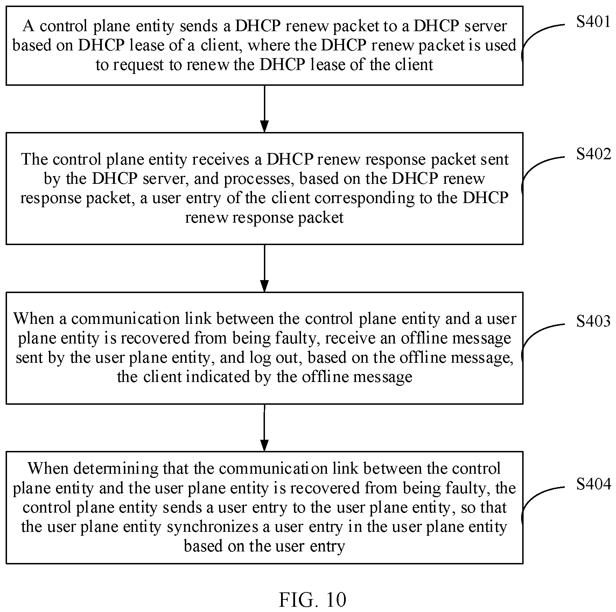

FIG. 10 is a schematic flowchart of yet another user keepalive method according to an embodiment of this application. The method is performed by the control plane entity. The method may include the following steps.

S401: The control plane entity sends a DHCP renew packet to a DHCP server based on DHCP lease of a user. The DHCP renew packet is used to request to renew the DHCP lease of the user.

For a related description of the DHCP lease and the DHCP renew packet, refer to S202. Details are not described herein again.

When a communication link between the control plane entity and the user plane entity is faulty, the control plane entity may check DHCP lease of each user stored in the control plane entity, and send the DHCP renew packet to the DHCP server at a preset moment.

For a description of the preset moment, refer to the foregoing description of the preset moment in S204. Details are not described herein again.

It may be understood that after receiving the DHCP renew packet, the DHCP server may determine, based on address allocation on the DHCP server at a current moment, whether to allow to renew the DHCP lease of the user. Then, the DHCP server generates a DHCP renew response packet based on a determining result, and sends the DHCP renew response packet to the control plane entity. The DHCP renew response packet indicates whether the DHCP lease of the user is successfully renewed.

S402: The control plane entity receives the DHCP renew response packet sent by the DHCP server, and processes, based on the DHCP renew response packet, a user entry of the user corresponding to the DHCP renew response packet.

Specifically, if the DHCP renew response packet indicates that the DHCP lease of the user is not renewed, the control plane entity further performs offline processing on the user after the DHCP lease expires. For a related description of the offline processing, refer to the foregoing description. Details are not described herein again.

If the DHCP renew response packet indicates that the DHCP lease of the user is renewed, the control plane entity keeps the user online after the DHCP lease expires.

S403: When the communication link between the control plane entity and the user plane entity is recovered from being faulty, receive an offline message sent by the user plane entity, and perform, based on the offline message, offline processing on the user indicated by the offline message.

Herein, the offline message is the offline message stored/buffered by the user plane in S304, and the offline message indicates that the user is offline.

After the communication link between the control plane entity and the user plane entity is recovered from being faulty, the user plane entity sequentially sends offline messages stored/buffered in the user plane entity to the control plane entity.

In this way, the control plane entity receives the offline message, and may perform, based on the offline message, offline processing on the user indicated by the offline message. For a related description of the offline processing, refer to the foregoing description. Details are not described herein again.

S404: When determining that the communication link between the control plane entity and the user plane entity is recovered from being faulty, the control plane entity sends a user entry to the user plane entity, so that the user plane entity synchronizes a user entry in the user plane entity based on the user entry.

It can be learned from the foregoing description that, when the communication link between the control plane entity and the user plane entity is faulty, the control plane entity may delete some user entries of the user whose the DHCP lease fails to be renewed.

In this way, after the communication link between the control plane entity and the user plane entity is recovered from being faulty, the control plane entity delivers a latest user entry to the user plane entity, so that the user plane entity deletes a redundant user entry in the user plane entity based on the user entry. In this way, the user entry in the user plane entity is synchronized with the user entry in the control plane entity.

It should be understood that a sequence of performing S403 and S404 is not specifically limited in this embodiment of this application. For example, in this embodiment of this application, S403 may be performed before S404, or S403 and S404 may be simultaneously performed.

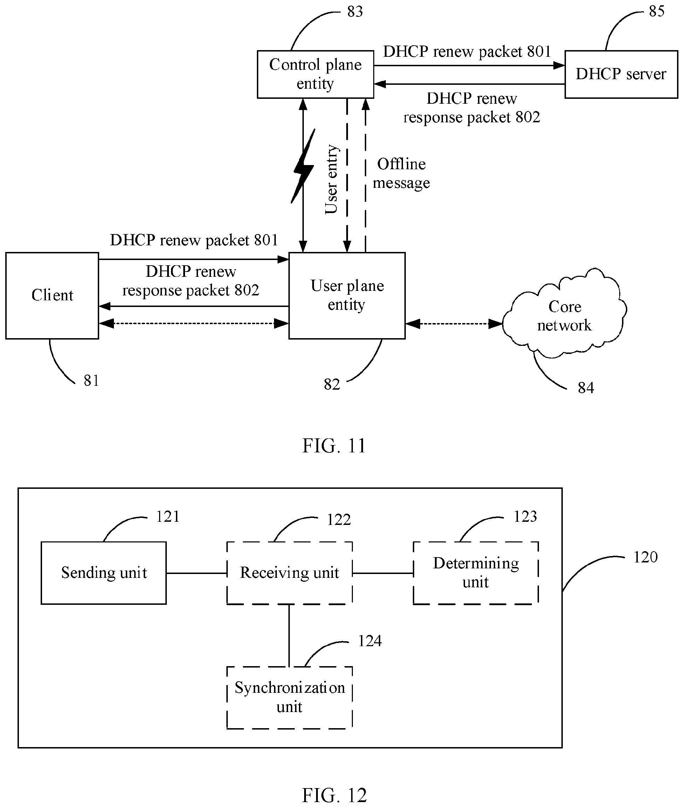

FIG. 11 shows an example of a schematic diagram of flow directions of a DHCP renew packet and a DHCP renew response packet in Scenario 2.

As shown in FIG. 11, when a communication link between a control plane entity and a user plane entity is faulty, a user 81 sends a DHCP renew packet 801 to the user plane entity 82 in DHCP lease of the user 81, and then the user plane entity 82 automatically replies to the user 81 with a DHCP renew response packet 802.

The control plane entity 83 sends the DHCP renew packet 801 to a DHCP server 85 based on preset DHCP lease of the user 81. Next, the DHCP server 85 determines the DHCP renew response packet 802 based on the DHCP renew packet 801, and sends the DHCP renew response packet 802 to the control plane entity 83. Then, the control plane entity 83 performs corresponding processing based on the DHCP renew response packet 802.

As shown by single-headed dashed lines in FIG. 8, after the communication link between the control plane entity and the user plane entity is recovered from being faulty, the user plane entity 82 sends, to the control plane entity, an offline message buffered when the communication link between the control plane entity and the user plane entity is faulty, so that the control plane entity 83 performs offline processing on a user indicated by the offline message.

After the communication link between the control plane entity and the user plane entity is recovered from being faulty, the control plane entity 83 sends a latest user entry to the user plane entity 82, so that the user plane entity 82 synchronizes a user entry in the user plane entity 82.

It should be understood that double-headed dashed lines in FIG. 8 are used to represent data flows exchanged between the user 81 and a core network 84 after the user 81 accesses the core network 84 through a broadband access gateway including the user plane entity 82 and the control plane entity 83.

In this way, according to the user keepalive method described in Embodiment 2 of this application, when the communication link between the control plane entity and the user plane entity is faulty, the user plane entity may automatically respond to a renew packet of the user, and the control plane entity also automatically requests a server to renew lease of the user. In this way, a problem that the user is offline due to the fault of the communication link between the control plane entity and the user plane entity is avoided, to keep the user alive.

In conclusion, according to the user keepalive method provided in embodiments of this application, the user plane entity may send the probe packets to the user, to keep the user alive. In addition, an offline user can be found in time by using the probe packets, and the user plane entity and the control plane entity can delete user entries of the offline user in time, to avoid accumulation of a large quantity of user entries of the offline user in the user plane entity and the control plane entity, and avoid a waste of resources. Furthermore, because the user plane entity sends the probe packets, a CPU load on the control plane entity can be reduced. In addition, the probe packets do not occupy a bandwidth of a packet channel between the control plane entity and the user plane entity, to save resources.

In addition, in the method, when the communication link between the control plane entity and the user plane entity is faulty, the user plane may automatically respond to the renew packet of the user, and the control plane entity may also automatically request the server to renew the lease of the user. In this way, a problem that the user is offline due to the fault of the communication link between the control plane entity and the user plane entity is avoided. That is, the user is kept alive.

The foregoing mainly describes the solutions provided in embodiments of this application from a perspective of the methods. To implement the foregoing functions, corresponding hardware structures and/or software modules for performing the functions are included. A person skilled in the art should easily be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In embodiments of this application, the user keepalive apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that in embodiments of this application, division into the modules is merely logical function division, and may be other division in an actual implementation.

FIG. 12 is a schematic diagram of a structure of a user keepalive apparatus 120 according to an embodiment of this application. The user keepalive apparatus 120 may be used in a broadband access gateway. The broadband access gateway further includes a control plane entity, and the broadband access gateway is configured to enable a user to access a network. The user keepalive apparatus 120 may be configured to execute the foregoing user keepalive method, for example, configured to execute the method shown in FIG. 5 or FIG. 9. The user keepalive apparatus 120 may include a sending unit 121.

The sending unit 121 is configured to send probe packets to the user based on a preset parameter, and send a probe failure message to the control plane entity if a probe response packet sent by the user is not received in preset duration. The preset parameter is obtained by the user plane entity in advance, the probe packets are used to check whether a communication link between the user and the user plane entity is faulty, and the probe failure message indicates the control plane entity to perform offline processing on the user.

For example, with reference to FIG. 5, the sending unit 121 may be configured to perform S101 and S104.

Optionally, the sending unit 121 is specifically configured to: if the probe response packet sent by the user is not received in the preset duration, and a communication link between the control plane entity and the user plane entity is faulty, send the probe failure message to the control plane entity after the communication link between the control plane entity and the user plane entity is recovered from being faulty.

For example, with reference to FIG. 5, the sending unit 121 may be configured to perform S104.

Optionally, if the user is a user using a Dynamic Host Configuration Protocol DHCP, the user keepalive apparatus 120 further includes: a receiving unit 122, configured to receive DHCP lease of the user sent by the control plane entity, where the DHCP lease indicates duration in which a DHCP server allows the user to access a network.

Optionally, if the communication link between the control plane entity and the user plane entity is faulty, the user keepalive apparatus 120 further includes: a determining unit 123, configured to: if a DHCP renew packet sent by the user is not received in the DHCP lease, determine that the user is offline. The sending unit 121 is further configured to: if a DHCP renew packet sent by the user is received in the DHCP lease, send a DHCP renew success packet to the user.

For example, with reference to FIG. 9, the determining unit 123 may be configured to perform S304. The sending unit 121 may be configured to perform S303.

Optionally, the sending unit 121 is further configured to: after the communication link between the control plane entity and the user plane entity is recovered from being faulty, if it is determined that the user is offline, send an offline message to the control plane entity, where the offline message indicates that the user is offline.

For example, with reference to FIG. 9, the sending unit 121 may be configured to perform S305.

Optionally, the user keepalive apparatus 120 further includes a synchronization unit 124, configured to synchronize a user entry with the control plane entity after the communication link between the control plane entity and the user plane entity is recovered from being faulty.

For example, with reference to FIG. 9, the synchronization unit 124 may be configured to perform S306.

Optionally, the preset parameter further includes at least one of a sending interval of the probe packets, a quantity of timeouts, single probe timeout duration, a quantity of probe times, probe start and end time points, or probe duration.

Optionally, if the communication link between the control plane entity and the user plane entity is normal, and the user is a user using a Dynamic Host Configuration Protocol DHCP, the receiving unit 122 is further configured to receive a DHCP renew packet sent by the user, where the DHCP renew packet is used by the control plane entity to request a DHCP server to renew the DHCP lease. The sending unit 121 is further configured to forward the DHCP renew packet to the control plane entity. The receiving unit 122 is further configured to receive a DHCP renew response packet sent by the control plane entity, where the DHCP renew response packet indicates whether the DHCP lease of the user is successfully renewed. The sending unit 121 is further configured to send the DHCP renew response packet to the user.

For specific descriptions of the optional manners, refer to the method embodiments. Details are not described herein again. In addition, for descriptions of any explanation and beneficial effect of the user keepalive apparatus 120 provided above, refer to the foregoing corresponding method embodiments. Details are not described herein again.

For example, with reference to FIG. 4, functions of the sending unit 121 and the receiving unit 122 in the user keepalive apparatus 120 may be implemented by the communications interface 43 in FIG. 4, and functions of the determining unit 123 and the synchronization unit 124 may be implemented by the processor 41 in FIG. 4 by executing the program code in the memory 42 in FIG. 4.

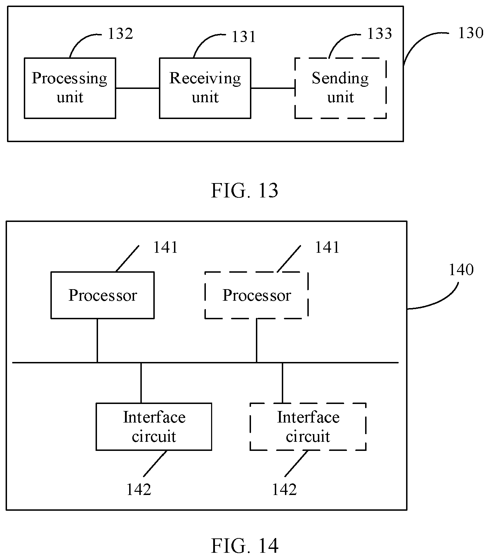

FIG. 13 is a schematic diagram of a structure of a user keepalive apparatus 130 according to an embodiment of this application. The user keepalive apparatus 130 may be used in a broadband access gateway. The broadband access gateway further includes a user plane entity, and the broadband access gateway is configured to enable a user to access a network. The user keepalive apparatus 130 may be configured to execute the foregoing user keepalive method, for example, configured to execute the method shown in FIG. 5, FIG. 7, or FIG. 10. The user keepalive apparatus 130 may include a receiving unit 131 and a processing unit 132.

The receiving unit 131 is configured to receive a probe failure message sent by the user plane entity. The processing unit 132 is configured to perform offline processing on the user based on the probe failure message. The probe failure message indicates that the user plane entity does not receive a probe response packet of the user in preset duration, the probe response packet is a response packet of a probe packet sent by the user plane entity to the user based on a preset parameter, and the preset parameter is a parameter sent by the control plane entity to the user plane entity in advance.

For example, with reference to FIG. 5, the receiving unit 131 and the processing unit 132 may be configured to perform S105.

Optionally, if the user is a user using a Dynamic Host Configuration Protocol DHCP, the user keepalive apparatus 130 further includes: a sending unit 133, configured to send DHCP lease of the user to the user plane entity, where the DHCP lease indicates duration in which a DHCP server allows the user to access a network.

Optionally, if a communication link between the control plane entity and the user plane entity is faulty, the sending unit 133 is further configured to send a DHCP renew packet to the DHCP server based on the DHCP lease of the user, where the DHCP renew packet is used to request to renew the DHCP lease of the user. The receiving unit 131 is further configured to receive a DHCP renew response packet sent by the DHCP server, where the DHCP renew response packet indicates whether the DHCP lease of the user is successfully renewed. The processing unit 132 is further configured to process, based on the DHCP renew response packet, a user entry corresponding to the user.

For example, with reference to FIG. 10, the sending unit 133 may be configured to perform S401, and the receiving unit 131 and the processing unit 132 may be configured to perform S402.

Optionally, the receiving unit 131 is further configured to: after the communication link between the control plane entity and the user plane entity is recovered from being faulty, receive an offline message sent by the user plane entity, where the offline message indicates that the user is offline. Herein, that the user is offline is determined by the user plane entity based on a fact that the user plane entity does not receive, in the DHCP lease and when the communication link between the control plane entity and the user plane entity is faulty, the DHCP renew packet sent by the user.

For example, with reference to FIG. 10, the receiving unit 131 may be configured to perform S403.

Optionally, the sending unit 133 is further configured to: after the communication link between the control plane entity and the user plane entity is recovered from being faulty, send a user entry to the user plane entity, where the user entry is used by the user plane entity to synchronize a user entry in the user plane entity.

For example, with reference to FIG. 10, the sending unit 133 may be configured to perform S404.

Optionally, the preset parameter includes at least one of a sending interval of probe packets, a quantity of timeouts, single probe timeout duration, a quantity of probe times, probe start and end time points, or probe duration.

Optionally, if a communication link between the control plane entity and the user plane entity is normal, and the control plane entity does not receive, in the DHCP lease of the user, a DHCP renew packet sent by the user through the user plane entity, the processing unit 132 is further configured to perform offline processing on the user. The DHCP renew packet is used to request to renew the DHCP lease of the user.

For example, with reference to FIG. 7, the processing unit 132 may be configured to perform S203.

Optionally, if a communication link between the control plane entity and the user plane entity is normal, and the control plane entity receives, in the DHCP lease of the user, a DHCP renew packet sent by the user through the user plane entity, the sending unit 133 is further configured to send the DHCP renew packet to the DHCP server. The receiving unit 131 is further configured to receive a DHCP renew response packet sent by the DHCP server, where the DHCP renew response packet indicates whether the DHCP lease of the user is successfully renewed. The processing unit 132 is further configured to process, based on the DHCP renew response packet, a user entry corresponding to the user. The sending unit 133 is further configured to send the DHCP renew response packet to the user through the user plane entity.

For example, with reference to FIG. 7, the sending unit 133 and the receiving unit 131 may be configured to perform S204, and the processing unit 132 and the sending unit 133 may be configured to perform S205.

For specific descriptions of the optional manners, refer to the method embodiments. Details are not described herein again. In addition, for descriptions of any explanation and beneficial effect of the user keepalive apparatus 130 provided above, refer to the foregoing corresponding method embodiments. Details are not described herein again.

For example, with reference to FIG. 4, functions of the receiving unit 131 and the sending unit 132 in the user keepalive apparatus 130 may be implemented by the communications interface 43 in FIG. 4, and functions of the processing unit 133 may be implemented by the processor 41 in FIG. 4 by executing the program code in the memory 42 in FIG. 4.

Embodiments of this application further provide a chip system 140. As shown in FIG. 14, the chip system 140 includes at least one processor and at least one interface circuit. In an example, when the chip system 140 includes one processor and one interface circuit, the processor may be a processor 141 shown in a solid line box (or a processor 141 shown in a dashed line box) in FIG. 14, and the interface circuit may be an interface circuit 142 shown in a solid line box (or an interface circuit 142 shown in a dashed box) in FIG. 14. When the chip system 140 includes two processors and two interface circuits, the two processors include the processor 141 shown in the solid line box and the processor 141 shown in the dashed line box in FIG. 14, and the two interface circuits include the interface circuit 142 shown in the solid line box and the interface circuit 142 shown in the dashed line box in FIG. 14. This is not limited.

The processor 141 and the interface circuit 142 may be interconnected through a line. For example, the interface circuit 142 may be configured to receive a signal (for example, from a user). For another example, the interface circuit 142 may be configured to send a signal to another apparatus (for example, the processor 141). For example, the interface circuit 142 may read instructions stored in the memory, and send the instructions to the processor 141. When the instructions are executed by the processor 141, the user keepalive apparatus is enabled to perform the steps in the foregoing embodiments. Certainly, the chip system 140 may further include another discrete component. This is not specifically limited in this embodiment of this application.

Another embodiment of this application further provides a computer-readable storage medium. The computer-readable storage medium stores instructions. When the instructions are run on a user keepalive apparatus, the user keepalive apparatus is enabled to perform the steps performed by the user keepalive apparatus in the method procedure shown in the foregoing method embodiments.

In some embodiments, the disclosed method may be implemented as computer program instructions encoded in a machine-readable format on a computer-readable storage medium or encoded on another non-transitory medium or product.

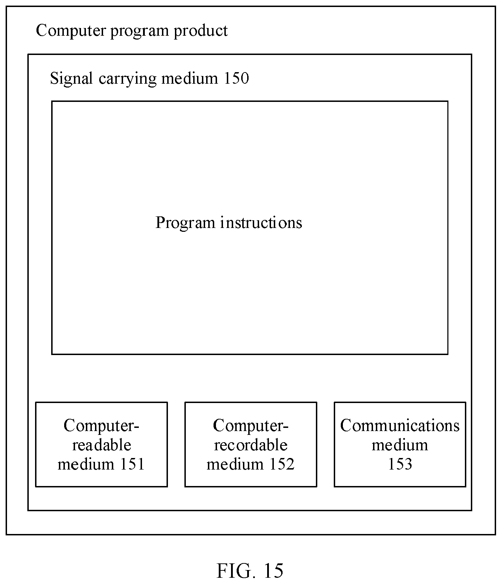

FIG. 15 schematically shows a conceptual partial view of a computer program product according to an embodiment of this application. The computer program product includes a computer program used to execute a computer process on a computing device.

In an embodiment, the computer program product is provided by using a signal carrying medium 150. The signal carrying medium 150 may include one or more program instructions. When the one or more program instructions are run by one or more processors, the functions or some of the functions described above with respect to FIG. 5, FIG. 7, FIG. 9, and FIG. 10 may be provided. Therefore, for example, one or more features of S101 to S105 in FIG. 5 or S401 to S404 in FIG. 10 may be carried by one or more instructions associated with the signal carrying medium 150. In addition, the program instructions in FIG. 15 are also described as example instructions.

In some examples, the signal carrying medium 150 may include a computer-readable medium 151, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal carrying medium 150 may include a computer-recordable medium 152, for example, but not limited to, a memory, a read/write (R/W) CD, or an R/W DVD.

In some implementations, the signal carrying medium 150 may include a communications medium 153, for example, but is not limited to a digital and/or analog communications medium (for example, an optical fiber cable, a waveguide, a wired communication link, or a wireless communication link).

The signal carrying medium 150 may be conveyed by a wireless-form communications medium 153 (for example, a wireless communications medium that complies with the IEEE 1502.11 standard or another transmission protocol). The one or more program instructions may be, for example, one or more computer-executable instructions or one or more logic implementation instructions.

In some examples, the user keepalive apparatus described in FIG. 5, FIG. 7, FIG. 9, or FIG. 10 may be configured to provide various operations, functions, or actions in response to one or more program instructions in the computer-readable medium 151, the computer-recordable medium 152, and/or the communications medium 153.

It should be understood that the arrangement described herein is merely for purpose of an example. Thus, a person skilled in the art appreciates that another arrangement and another element (for example, a machine, an interface, a function, a sequence, and a group of functions) can be used to replace the arrangement, and some elements may be omitted together depending on a desired result. In addition, many of the described elements are functional entities that can be implemented as discrete or distributed components, or implemented in any suitable combination and at any suitable location in combination with another component.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer-executable instructions are executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A user keepalive method, used in a broadband access gateway, wherein the broadband access gateway comprises a control plane entity and a user plane entity, the broadband access gateway is configured to enable a user to access a network, the method is performed by the user plane entity, and the method comprises:
sending one or more probe packets to the user based on a preset parameter, wherein the preset parameter is obtained by the user plane entity in advance, and the one or more probe packets are used to check whether a communication link between the user and the user plane entity is faulty; and
sending a probe failure message to the control plane entity if a probe response packet sent by the user is not received in preset duration, wherein the probe failure message indicates the control plane entity to perform offline processing on the user.

2. The method according to claim 1, wherein the sending a probe failure message to the control plane entity if a probe response packet sent by the user is not received in preset duration specifically comprises:
if the probe response packet sent by the user is not received in the preset duration and a communication link between the control plane entity and the user plane entity is faulty, sending the probe failure message to the control plane entity after the communication link between the control plane entity and the user plane entity is recovered from being faulty.

3. The method according to claim 1 or 2, wherein if the user is a user using a Dynamic Host Configuration Protocol DHCP, the method further comprises:
receiving DHCP lease of the user sent by the control plane entity, wherein the DHCP lease indicates duration in which a DHCP server allows the user to access a network.

4. The method according to claim 3, wherein if the communication link between the control plane entity and the user plane entity is faulty, the method further comprises:
if a DHCP renew packet sent by the user is not received in the DHCP lease, determining that the user is offline; and
if a DHCP renew packet sent by the user is received in the DHCP lease, sending a DHCP renew success packet to the user.

5. The method according to claim 4, wherein after the communication link between the control plane entity and the user plane entity is recovered from being faulty, the method further comprises:
if it is determined that the user is offline, sending an offline message to the control plane entity, wherein the offline message indicates that the user is offline.

6. The method according to any one of claims 1 to 5, wherein after the communication link between the control plane entity and the user plane entity is recovered from being faulty, the method further comprises:
synchronizing a user entry with the control plane entity.

7. The method according to any one of claims 1 to 6, wherein the preset parameter comprises at least one of a sending interval of the one or more probe packets, a quantity of timeouts, single probe timeout duration, a quantity of probe times, probe start and end time points, or probe duration.

8. The method according to any one of claims 1 to 3, wherein if the communication link between the control plane entity and the user plane entity is normal, and the user is a user using the Dynamic Host Configuration Protocol DHCP, the method further comprises:
receiving a DHCP renew packet sent by the user, wherein the DHCP renew packet is used by the control plane entity to request the DHCP server to renew the DHCP lease;
forwarding the DHCP renew packet to the control plane entity;
receiving a DHCP renew response packet sent by the control plane entity, wherein the DHCP renew response packet indicates whether the DHCP lease of the user is successfully renewed; and
sending the DHCP renew response packet to the user.

9. A user keepalive method, used in a broadband access gateway, wherein the broadband access gateway comprises a control plane entity and a user plane entity, the broadband access gateway is configured to enable a user to access a network, the method is performed by the control plane entity, and the method comprises:
receiving a probe failure message sent by the user plane entity, wherein the probe failure message indicates that a probe response packet of the user is not received by the user plane entity in preset duration, the probe response packet is a response packet of one or more probe packets sent by the user plane entity to the user based on a preset parameter, and the preset parameter is a parameter sent by the control plane entity to the user plane entity in advance; and
performing offline processing on the user based on the probe failure message.

10. The method according to claim 9, wherein if the user is a user using a Dynamic Host Configuration Protocol DHCP, the method further comprises:
sending DHCP lease of the user to the user plane entity, wherein the DHCP lease indicates duration in which a DHCP server allows the user to access a network.

11. The method according to claim 10, wherein if a communication link between the control plane entity and the user plane entity is faulty, the method further comprises:
sending a DHCP renew packet to the DHCP server based on the DHCP lease of the user, wherein the DHCP renew packet is used to request to renew the DHCP lease of the user;
receiving a DHCP renew response packet sent by the DHCP server, wherein the DHCP renew response packet indicates whether the DHCP lease of the user is successfully renewed; and
processing, based on the DHCP renew response packet, a user entry corresponding to the user.

12. The method according to any one of claims 9 to 11, wherein after the communication link between the control plane entity and the user plane entity is recovered from being faulty, the method further comprises:
receiving an offline message sent by the user plane entity, wherein the offline message indicates that the user is offline, and that the user is offline is determined by the user plane entity based on a fact that the user plane entity does not receive, in the DHCP lease and when the communication link between the control plane entity and the user plane entity is faulty, a DHCP renew packet sent by the user.

13. The method according to any one of claims 9 to 12, wherein after the communication link between the control plane entity and the user plane entity is recovered from being faulty, the method further comprises:
sending a user entry to the user plane entity, wherein the user entry is used by the user plane entity to synchronize a user entry in the user plane entity.

14. The method according to any one of claims 9 to 13, wherein the preset parameter comprises at least one of a sending interval of one or more probe packets, a quantity of timeouts, single probe timeout duration, a quantity of probe times, probe start and end time points, or probe duration.

15. The method according to claim 9 or 10, wherein if a communication link between the control plane entity and the user plane entity is normal, and the control plane entity does not receive, in the DHCP lease of the user, a DHCP renew packet sent by the user through the user plane entity, the method further comprises:
performing offline processing on the user, wherein the DHCP renew packet is used to request to renew the DHCP lease of the user.

16. The method according to claim 9 or 10, wherein if a communication link between the control plane entity and the user plane entity is normal, and the control plane entity receives, in the DHCP lease of the user, a DHCP renew packet sent by the user through the user plane entity, the method further comprises:
sending the DHCP renew packet to the DHCP server;
receiving a DHCP renew response packet sent by the DHCP server, wherein the DHCP renew response packet indicates whether the DHCP lease of the user is successfully renewed;
processing, based on the DHCP renew response packet, a user entry corresponding to the user; and
sending the DHCP renew response packet to the user through the user plane entity.

17. A user keepalive apparatus, used in a broadband access gateway, wherein the broadband access gateway further comprises a control plane entity, the broadband access gateway is configured to enable a user to access a network, and the apparatus comprises:
a sending unit, configured to send one or more probe packets to the user based on a preset parameter, and send a probe failure message to the control plane entity if a probe response packet sent by the user is not received in preset duration, wherein
the preset parameter is obtained by the user plane entity in advance, the one or more probe packets are used to check whether a communication link between the user and the user plane entity is faulty, and the probe failure message indicates the control plane entity to perform offline processing on the user.

18. The apparatus according to claim 17, wherein
the sending unit is specifically configured to: if the probe response packet sent by the user is not received in the preset duration and a communication link between the control plane entity and the user plane entity is faulty, send the probe failure message to the control plane entity after the communication link between the control plane entity and the user plane entity is recovered from being faulty.

19. The apparatus according to claim 17 or 18, wherein if the user is a user using a Dynamic Host Configuration Protocol DHCP, the apparatus further comprises:
a receiving unit, configured to receive DHCP lease of the user sent by the control plane entity, wherein the DHCP lease indicates duration in which a DHCP server allows the user to access a network.

20. The apparatus according to claim 19, wherein if a communication link between the control plane entity and the user plane entity is faulty, the apparatus further comprises:
a determining unit, configured to: if a DHCP renew packet sent by the user is not received in the DHCP lease, determine that the user is offline; and
the sending unit is further configured to: if a DHCP renew packet sent by the user is received in the DHCP lease, send a DHCP renew success packet to the user.

21. The apparatus according to claim 20, wherein
the sending unit is further configured to: after the communication link between the control plane entity and the user plane entity is recovered from being faulty, if it is determined that the user is offline, send an offline message to the control plane entity, wherein the offline message indicates that the user is offline.

22. The apparatus according to any one of claims 17 to 21, wherein the apparatus further comprises:
a synchronization unit, configured to synchronize a user entry with the control plane entity after the communication link between the control plane entity and the user plane entity is recovered from being faulty.

23. The apparatus according to any one of claims 17 to 22, wherein the preset parameter comprises at least one of a sending interval of the one or more probe packets, a quantity of timeouts, single probe timeout duration, a quantity of probe times, probe start and end time points, or probe duration.

24. The apparatus according to any one of claims 17 to 19, wherein if the communication link between the control plane entity and the user plane entity is normal, and the user is a user using the Dynamic Host Configuration Protocol DHCP,
the receiving unit is further configured to receive a DHCP renew packet sent by the user, wherein the DHCP renew packet is used by the control plane entity to request the DHCP server to renew the DHCP lease;
the sending unit is further configured to forward the DHCP renew packet to the control plane entity;
the receiving unit is further configured to receive a DHCP renew response packet sent by the control plane entity, wherein the DHCP renew response packet indicates whether the DHCP lease of the user is successfully renewed; and
the sending unit is further configured to send the DHCP renew response packet to the user.

25. A user keepalive apparatus, used in a broadband access gateway, wherein the broadband access gateway comprises a user plane entity, the broadband access gateway is configured to enable a user to access a network, and the apparatus comprises:
a receiving unit, configured to receive a probe failure message sent by the user plane entity, wherein the probe failure message indicates that the user plane entity does not receive a probe response packet of the user in preset duration, the probe response packet is a response packet of one or more probe packets sent by the user plane entity to the user based on a preset parameter, and the preset parameter is a parameter sent by the control plane entity to the user plane entity in advance; and
a processing unit, configured to perform offline processing on the user based on the probe failure message.

26. The apparatus according to claim 25, wherein if the user is a user using a Dynamic Host Configuration Protocol DHCP, the apparatus further comprises:
a sending unit, configured to send DHCP lease of the user to the user plane entity, wherein the DHCP lease indicates duration in which a DHCP server allows the user to access a network.

27. The apparatus according to claim 26, wherein if a communication link between the control plane entity and the user plane entity is faulty,
the sending unit is further configured to send a DHCP renew packet to the DHCP server based on the DHCP lease of the user, wherein the DHCP renew packet is used to request to renew the DHCP lease of the user;
the receiving unit is further configured to receive a DHCP renew response packet sent by the DHCP server, wherein the DHCP renew response packet indicates whether the DHCP lease of the user is successfully renewed; and
the processing unit is further configured to process, based on the DHCP renew response packet, a user entry corresponding to the user.

28. The apparatus according to any one of claims 25 to 27, wherein
the receiving unit is further configured to: after the communication link between the control plane entity and the user plane entity is recovered from being faulty, receive an offline message sent by the user plane entity, wherein the offline message indicates that the user is offline, and that the user is offline is determined by the user plane entity based on a fact that the user plane entity does not receive, in the DHCP lease and when the communication link between the control plane entity and the user plane entity is faulty, a DHCP renew packet sent by the user.

29. The apparatus according to any one of claims 25 to 28, wherein
the sending unit is further configured to: after the communication link between the control plane entity and the user plane entity is recovered from being faulty, send a user entry to the user plane entity, wherein the user entry is used by the user plane entity to synchronize a user entry in the user plane entity.

30. The apparatus according to any one of claims 25 to 29, wherein the preset parameter comprises at least one of a sending interval of one or more probe packets, a quantity of timeouts, single probe timeout duration, a quantity of probe times, probe start and end time points, or probe duration.

31. The apparatus according to claim 25 or 26, wherein if a communication link between the control plane entity and the user plane entity is normal, and the control plane entity does not receive, in the DHCP lease of the user, a DHCP renew packet sent by the user through the user plane entity,
the processing unit is further configured to perform offline processing on the user, wherein the DHCP renew packet is used to request to renew the DHCP lease of the user.

32. The apparatus according to claim 25 or 26, wherein if a communication link between the control plane entity and the user plane entity is normal, and the control plane entity receives, in the DHCP lease of the user, a DHCP renew packet sent by the user through the user plane entity,
the sending unit is further configured to send the DHCP renew packet to the DHCP server;
the receiving unit is further configured to receive a DHCP renew response packet sent by the DHCP server, wherein the DHCP renew response packet indicates whether the DHCP lease of the user is successfully renewed;
the processing unit is further configured to process, based on the DHCP renew response packet, a user entry corresponding to the user; and
the sending unit is further configured to send the DHCP renew response packet to the user through the user plane entity.

33. A user keepalive apparatus, comprising a memory and one or more processors, wherein the memory is configured to store computer instructions, and the processor is configured to invoke the computer instructions, so that the apparatus performs the method according to any one of the claims 1 to 16.

34. A computer-readable storage medium, wherein the computer-readable storage medium stores a computer program, and when the computer program is run on a computer, the computer is enabled to perform the method according to any one of claims 1 to 16.
